(19) Europäisches Patentamt
European Patent Office
Office européen des brevets

(11) EP 2 197 965 B1

(12) # EUROPÄISCHE PATENTSCHRIFT

(45) Veröffentlichungstag und Bekanntmachung des Hinweises auf die Patenterteilung:
**23.02.2011 Patentblatt 2011/08**

(21) Anmeldenummer: **08837191.9**

(22) Anmeldetag: **06.10.2008**

(51) Int Cl.:
***C09D 133/02*** (2006.01) ***C09D 131/00*** (2006.01)
***C09D 133/06*** (2006.01) ***C08F 220/00*** (2006.01)
***C08F 220/04*** (2006.01) ***C08L 33/02*** (2006.01)
***C08L 31/06*** (2006.01) ***C08L 33/06*** (2006.01)
***D06M 15/263*** (2006.01)

(86) Internationale Anmeldenummer:
**PCT/EP2008/063352**

(87) Internationale Veröffentlichungsnummer:
**WO 2009/047232 (16.04.2009 Gazette 2009/16)**

(54) **WÄSSRIGES BINDEMITTEL FÜR FASERFÖRMIGE ODER KÖRNIGE SUBSTRATE**

AQUEOUS BINDER FOR FIBROUS OR GRANULAR SUBSTRATES

LIANT AQUEUX POUR SUBSTRATS FIBREUX OU GRANULEUX

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.10.2007 EP 07118135**

(43) Veröffentlichungstag der Anmeldung:
**23.06.2010 Patentblatt 2010/25**

(73) Patentinhaber: **BASF SE**
**67056 Ludwigshafen (DE)**

(72) Erfinder:
- **ELIZALDE, Oihana**
  **68159 Mannheim (DE)**
- **MICHL, Kathrin**
  **67063 Ludwigshafen (DE)**
- **VENKATESH, Rajan**
  **68167 Mannheim (DE)**

(56) Entgegenhaltungen:
**WO-A-01/18074 WO-A-03/018687**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 197 965 B1

## Beschreibung

Der Gegenstand der vorliegenden Erfindung betrifft die Verwendung eines wässrigen Bindemittels, enthaltend

a) ein Polymerisat A, welches durch radikalische Polymerisation von

| | |
|---|---|
| 0,1 bis 40 Gew.-% | wenigstens eines C3- bis C30-Alkens (Monomer A1), |
| 40 bis 99,9 Gew.-% | wenigstens einer ethylenisch ungesättigten C3- bis C6- Monocarbonsäure (Monomer A2), |
| 0 bis 50 Gew.-% | wenigstens einer ethylenisch ungesättigten C4- bis C12- Dicarbonsäure und/oder der daraus zugänglichen ethyle- nisch ungesättigten Dicarbonsäuremonoalkylester oder Di- carbonsäureanhydride (Monomer A3), und |
| 0 bis 30 Gew.-% | wenigstens einer anderen ethylenisch ungesättigten Verbin- dung, welche mit den Monomeren A1 bis A3 copolymerisier- bar ist (Monomer A4), |

erhalten wurde, wobei sich die Monomeren A1 bis A4 zu 100 Gew.-% addieren (Gesamtmonomerenmenge), und

b) eine Polyolverbindung mit wenigstens 2 Hydroxylgruppen (Polyol B),
als Bindemittel für faserförmige und/oder körnige Substrate.

Gegenstand der vorliegenden Erfindung ist ebenfalls ein Verfahren zur Herstellung von Formkörpern unter Verwendung von faserförmigen oder körnigen Substraten und wässrigem Bindemittel sowie die Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A 445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A 583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

Die EP-A 651088 beschreibt entsprechende Bindemittel für Substrate aus Cellulosefaser. Diese Bindemittel enthalten zwingend einen phosphorhaltigen Reaktionsbeschleuniger.

Die EP-A 672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A 2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Verfahren zur Herstellung von Polymerisaten auf Basis von Alkenen und anderen copolymerisierbaren ethylenisch ungesättigten Verbindungen sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis 12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4,921,898, US-A 5,070,134, US-A 5,110,856, US-A 5,629,370, EP-A 295727, EP-A 757065, EP-A 1114833 oder DE-A 19620817).

Zur radikalisch initiierten wässrigen Emulsionspolymerisation unter Verwendung höherer Alkene ist von nachfolgendem Stand der Technik auszugehen.

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübetragungsreaktionen begründet.

Die Herstellung wässriger Polymerisatdispersionen auf Basis unterschiedlicher, extrem wasserunlöslicher Monomerer durch radikalisch initiierte Emulsionspolymerisation unter Verwendung von Wirtsverbindungen wird in US-A 5,521,266 und EP-A 780401 offenbart.

In der DE-A 102005035692 wird die Herstellung von wässrigen Polymerisatdispersionen auf der Basis 5 bis 12 C-Atome aufweisenden Alkenen offenbart. Dabei werden die 5 bis 12 C-Atome aufweisenden Alkene dem Polymerisationsgemisch unter Polymerisationsbedingungen zudosiert.

Gemäß EP-A 891430 werden wässrige Polymersysteme zur Lederhydrophobierung offenbart, welche durch radikalische Polymerisation von 20 bis 90 Gew.-% monoethylenisch ungesättigten C4- bis C6-Dicarbonsäuren bzw. deren Anhydriden mit 5 bis 50 Gew.-% eines C2- bis C6-Olefins und 5 bis 50 Gew.-% eines hydrophoben ethylenisch ungesättigten Monomeren erhalten werden.

Die EP-A 670909 offenbart wässrige Polymerdispersionen, welche als Komponente zur Fettung bzw. Weichmachung von Leder eingesetzt werden und welche durch radikalische Polymerisation von Maleinsäureanhydrid, C12- bis C30-α-Olefinen und Estern von Acrylsäure, Methacrylsäure und/oder Maleinsäure mit C12- bis C30-Alkoholen erhalten werden.

Beschichtungszusammensetzungen auf Basis eine Vernetzers, wie beispielsweise ein endgruppenverschlossenes Polyisocyanat oder ein Aminoplast und eines Emulsionspolymerisats auf Basis von α-Olefinen und ethylenisch ungesättigten Carbonsäueranhydriden, werden in der EP-A 450452 offenbart.

Gemäß E. Witek, A. Kochanowski, E. Bortel, Polish Journal of Applied Chemistry XLVI, No. 3-4, Seiten 177-185 (2002) wird die Verwendung von Copolymeren auf Basis von langkettigen α-Olefinen und hydrophilen Monomeren, wie beispielsweise Acrylsäure und/oder Maleinsäureanhydrid zum Entfernen von Rohölverunreinigungen in Wasser beschrieben.

Aufgabe der vorliegenden Erfindung war es, ein alternatives formaldehydfreies Bindemittelsystem für faserförmige oder körnige Substrate zur Verfügung zu stellen.

Demgemäß wurde die eingangs definierte Verwendung gemäβ Anspüchen 2 sowie 4 bis 11 gefunden.

Erfindungsgemäß wird ein wässriges Bindemittel eingesetzt, das ein Polymerisat A enthält, welches durch radikalische Polymerisation von

| | |
|---|---|
| 0,1 bis 40 Gew.-% | wenigstens eines Monomeren A1, |
| 40 bis 99,9 Gew.-% | wenigstens eines Monomeren A2, |
| 0 bis 50 Gew.-% | wenigstens eines Monomeren A3, und |
| 0 bis 30 Gew.-% | wenigstens eines Monomeren A4, |

erhalten wurde.

Mit besonderem Vorteil werden wässrige Bindemittel eingesetzt, die ein Polymerisat A enthalten, welches durch radikalische Polymerisation von

| | |
|---|---|
| 1 bis 25 Gew.-% | wenigstens eines Monomeren A1, |
| 50 bis 89 Gew.-% | wenigstens eines Monomeren A2, und |
| 10 bis 40 Gew.-% | wenigstens eines Monomeren A3 |

und insbesondere vorteilhaft

| | |
|---|---|
| 4 bis 20 Gew.-% | wenigstens eines Monomeren A1, |
| 55 bis 70 Gew.-% | wenigstens eines Monomeren A2, und |
| 20 bis 35 Gew.-% | wenigstens eines Monomeren A3 |

erhalten wurde.

Als Monomere A 1 kommen C3- bis C30-Alkene, bevorzugt C6- bis C18-Alkene und insbesondere C8- bis C12-Alkene in Betracht, welche sich radikalisch copolymerisieren lassen und welche neben Kohlenstoff und Wasserstoff keine weiteren Elemente ausweisen. Hierzu zählen beispielsweise die linearen Alkene Propen, n-Buten-1, n-Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1, 3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Dodecen-4, Dodecen-5, Dodecen-6, 4,8-Dimethyldecen-1, 4-Ethyldecen-1, 6-Ethyldecen-1, 8-Ethyldecen-1, 2,5,8-Trimethylnonen-1, Tridecen-1, Tridecen-2, Tridecen-3, Tridecen-4, Tridecen-5, Tridecen-6, 2-Methyldodecen-1, 11-Methyldodecen-1, 2,5-Dimethylundecen-2, 6,10-Dimethylundecen-1, Tetradecen-1, Tetradecen-2, Tetradecen-3, Tetradecen-4, Tetradecen-5, Tetradecen-6, Tetradecen-7, 2-Methyltridecen-1, 2-Ethyldodecen-1, 2,6,10-Trimethylundecen-1, 2,6-Dimethyldodecen-2, 11-Methyltridecen-1, 9-Methyltridecen-1, 7-Methyltridecen-1, 8-Ethyldodecen-1, 6-Ethyldodecen-1, 4-Ethyldodecen-1, 6-Butyldecen-1, Pentadecen-1, Pentadecen-2, Pentadecen-3, Pentadecen-4, Pentadecen-5, Pentadecen-6, Pentadecen-7, 2-Methyltetradecen-1, 3,7,11-Trimethyldodecen-1, 2,6,10-Trimethyldodecen-1, Hexadecen-1, Hexadecen-2, Hexadecen-3, Hexadecen-4, Hexadecen-5, Hexadecen-6, Hexadecen-7, Hexadecen-8, 2-Methylpentadecen-1, 3,7,11-Trimethyltridecen-1, 4,8,12-Trimethyltridecen-1, 11-Methylpentadecen-1, 13-Methylpentadecen-1, 7-Methylpentadecen-1, 9-Methylpentadecen-1, 12-Ethyltetradecen-1, 8-Ethyltetradecen-1, 4-Ethyltetradecen-1, 8-Butyldodecen-1, 6-Butyldodecen-1 Heptadecen-1, Heptadecen-2, Heptadecen-3, Heptadecen-4, Heptadecen-5, Heptadecen-6, Heptadecen-7, Heptadecen-8, 2-Methylhexadecen-1, 4,8, 12-Trimethyltetradecen-1, Octadecen-1, Octadecen-2, Octadecen-3, Octadecen-4, Octadecen-5, Octadecen-6, Octadecen-7, Octadecen-8, Octadecen-9, 2-Methylheptadecen-1, 13-Methylheptadecen-1, 10-Butyltetradecen-1, 6-Butyltetradecen-1, 8-Butyltetradecen-1, 10-Ethlyhexadecen-1, Nonadecen-1, Nonadecen-2, 1-Methyloctadecen-1, 7,11,15-Trimethylhexadecen-1, Eicosen-1, Eicosen-2, 2,6,10, 14-Tetramethylhexadecen-2, 3,7,11,15-Tetramethylhexadecen-2, 2,7,11,15-Tetramethylhedecen-1, Docosen-1, Docosen-2, Docosen-7, 4,9,13,17-Tetramethyloctadecen-1, Tetracosen-1, Tetracosen-2, Tetracosen-9, Hexacosen-1, Hexacosene-2, Hexacosen-9, Triaconten-1, Dotriaconten-1 oder Tritriaconten-1 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methy-Icyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo[2.2.2]octen-2, Bicyclo[3.3.1]nonen-2 oder Bicyclo[3.2.2]nonen-6. Selbstverständlich können auch Gemische vorgenannter Monomere A eingesetzt werden.

Bevorzugt werden die 1-Alkene eingesetzt, beispielsweise Propen, 2-Methylpropen, Buten-1, Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1, 2-Methylocten-1, Tridecen-1, Tetradecen-1, Hexadecen-1, Heptadecen-1, Octadecen-1, Nonadecen-1, Eicosen-1, Docosen-1, Tetracosen-1, 2,6-Dimethyldodecen-1, 6-Butyldecen-1, 4,8,12-Trimethyldecen-1 oder 2-Methylheptadecen-1. Vorteilhaft wird als wenigstens ein Monomer A1 ein 6 bis 18 Kohlenstoffatome aufweisendes Alken, bevorzugt ein 8 bis 12 Kohlenstoffatome aufweisendes 1-Alken eingesetzt. Insbesondere bevorzugt werden Octen-1, Nonen-1, Decen-1, Undecen-1 und/oder Dodecen-1 eingesetzt, wobei Octen-1 und Dodecen-1 besonders bevorzugt sind.

Die Menge an Monomeren A1 bei der Herstellung des Polymerisats A beträgt 0,1 bis 40 Gew.-%, bevorzugt 1 bis 25 Gew.-% und insbesondere bevorzugt 4 bis 20 Gew.-%, jeweils bezogen auf die Gesamtmonomerenmenge.

Als Monomere A2 kommen 3 bis 6 Kohlenstoffatome aufweisende ethylenisch ungesättigte, insbesondere $\alpha$, $\beta$-monoethylenisch ungesättigte Monocarbonsäuren sowie deren wasserlöslichen Salze, insbesondere deren Alkalimetall- oder Ammoniumsalze, wie beispielsweise Acrylsäure, Methacrylsäure, Ethylacrylsäure, Allylessigsäure, Crotonsäure und/oder Vinylessigsäure sowie die Ammonium-, Natrium- oder Kaliumsalze der vorgenannten Säuren in Betracht. Besonders bevorzugt sind Acrylsäure und Methacrylsäure, wobei Acrylsäure insbesondere bevorzugt ist.

Die Menge an Monomeren A2 bei der Herstellung des Polymerisats A beträgt 40 bis 99,9 Gew.-%, bevorzugt 50 bis 89 Gew.-% und insbesondere bevorzugt 55 bis 70 Gew.-%, jeweils bezogen auf die Gesamtmonomerenmenge.

Als Monomere A3 kommen 4 bis 12 Kohlenstoffatome aufweisende ethylenisch ungesättigte, insbesondere a, $\beta$-monoethylenisch ungesättigte Dicarbonsäuren sowie deren wasserlöslichen Salze, insbesondere deren Alkalimetall- oder Ammoniumsalze, und/oder die aus den 4 bis 12 Kohlenstoffatomen aufweisenden ethylenisch ungesättigten Dicarbonsäuren zugänglichen ethylenisch ungesättigten Dicarbonsäuremonoalkylester, insbesondere deren C1- bis C6-Monoalkylester, beispielsweise deren Monomethyl-, Monoethyl-, Monopropyl-, Monoisopropyl-, Monobutyl-, Monopentyl- oder Monohexylester sowie die entsprechend zugänglichen Dicarbonsäureanhydride in Betracht, wie beispielsweise Maleinsäure, Fumarsäure, Itakonsäure, Methylmaleinsäure, 1,2,3,6-Tetrahydrophthalsäure sowie die Ammonium-, Natrium- oder Kaliumsalze der vorgenannten Säuren, Maleinsäure-, Fumarsäure-, Itakonsäure-, Methylmaleinsäure-, 1,2,3,6-Tetrahydrophthalsäuremonomethylester, -monoethylester, -monopropylester, Maleinsäureanhydrid, Itakonsäureanhydrid, Methylmaleinsäureanhydrid oder 1,2,3,6-Tetrahydrophthalsäureanhydrid. Besonders bevorzugt sind Maleinsäureanhydrid, Methylmaleinsäureanhydrid, Maleinsäuremonomethylester, Itakonsäure, Itakonsäureanhydrid, 1,2,3,6-Tetrahydrophthalsäure und/oder 1,2,3,6-Tetrahydrophthalsäureanhydrid, wobei Maleinsäureanhydrid insbesondere bevorzugt ist.

Die Menge an Monomeren A3 bei der Herstellung des Polymerisats A beträgt 0 bis 50 Gew.-%, bevorzugt 10 bis 40 Gew.-% und insbesondere bevorzugt 20 bis 35 Gew.-%, jeweils bezogen auf die Gesamtmonomerenmenge.

Als Monomere A4 kommen alle diejenigen ethylenisch ungesättigten Verbindungen in Betracht, welche mit den Monomeren A1 bis A3 in einfacher Weise radikalisch copolymerisierbar sind, wie beispielsweise vinylaromatische

Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A4, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A4 bilden. In aller Regel weisen diese Monomeren in Wasser bei Normalbedingungen [20 °C, 1 atm (absolut)] lediglich eine mäßige bis geringe Löslichkeit auf.

Monomere A4, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall werden die vorgenannten wasserlöslichen Monomeren A4 lediglich als modifizierende Monomere in Mengen von ≤ 10 Gew.-%, bevorzugt ≤ 5 Gew.-% und insbesondere bevorzugt ≤ 3 Gew.-%, jeweils bezogen auf die Gesamtmenge an Monomeren A4, eingesetzt.

Monomere A4, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykol-dimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Häufig werden die vorgenannten vernetzenden Monomeren A4 in Mengen von ≤ 10 zu Gew.-%, bevorzugt jedoch in Mengen von ≤ 3 Gew.-%, jeweils bezogen auf die Gesamtmenge an Monomeren A4, eingesetzt. Insbesondere bevorzugt werden jedoch keinerlei derartige vernetzenden Monomeren A4 zu Herstellung des Polymerisats A eingesetzt.

Vorteilhaft werden zur Herstellung des Polymerisats A als Monomere A4 solche Monomeren oder Monomerenmischungen eingesetzt, welche zu

- 50 bis 100 Gew.-% Ester der Acryl- und/oder Methacrylsäure mit 1 bis 12 Kohlenstoffatomen aufweisenden Alkanolen, oder
- 50 bis 100 Gew.-% Styrol und/oder Butadien, oder
- 50 bis 100 Gew.-% Vinylchlorid und/oder Vinylidenchlorid, oder
- 50 bis 100 Gew.-% Vinylacetat und/oder Vinylpropionat

enthalten.

Die Menge an Monomeren A4 bei der Herstellung des Polymerisats A beträgt 0 bis 30 Gew.-% und bevorzugt 0 bis 15 Gew.-%, jeweils bezogen auf die Gesamtmonomerenmenge. Insbesondere bevorzugt werden keine Monomeren A4 eingesetzt.

Erfindungsgemäß ist es möglich, gegebenenfalls jeweils eine Teil- oder die Gesamtmenge der Monomere A1 bis A4 im Polymerisationsgefäß vorzulegen. Es ist aber auch möglich, jeweils die Gesamtmenge oder die jeweils gegebenenfalls verbliebene Restmenge der Monomere A1 bis A4 während der Polymerisationsreaktion zuzudosieren. Die Gesamtmengen oder die gegebenenfalls verbliebenen Restmengen an Monomeren A1 bis A4 können dem Polymerisationsgefäß dabei diskontinuierlich in einer oder mehreren Portionen oder kontinuierlich mit gleichbleibenden oder sich verändernden Mengenströmen zudosiert werden. Häufig wird wenigstens eine Teilmenge der Monomeren A1 und/oder A3 und vorteilhaft ausschließlich Monomer A3 im Polymerisationsmedium vor Initiierung der Polymerisationsreaktion vorgelegt.

Die Herstellung der Polymerisate A ist dem Fachmann im Prinzip geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Bevorzugt erfolgt die radikalisch initiierte Lösungspolymerisation der Monomeren A1 bis A4 in einem protischen oder einem aprotischen organischen Lösungsmittel, wobei aprotische Lösungsmittel insbesondere bevorzugt sind. Als aprotische organische Lösungsmittel kommen alle organischen Lösemittel in Frage, welche unter Polymerisationsbedingungen kein ionisierbares Proton im Molekül enthalten bzw. einen pKs-Wert aufweisen, welcher größer als der von Wasser ist. Beispiele für derartige Lösungsmittel sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige C1- bzw. C2-Fluorchlorkohlenwasserstoffe, aliphatische C2- bis C5-Nitrile, wie Acetonitril, Propionitril, Butyronitril oder Valeronitril, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

Vorzugsweise werden jedoch solche aprotischen organischen Lösungsmittel ausgewählt, in welchen sich die jeweils eingesetzten Radikalinitiatoren gut lösen. Insbesondere werden solche aprotischen organischen Lösemittel eingesetzt, in denen sich neben den Radikalinitiatoren auch die Polymerisate A gut lösen. Insbesondere bevorzugt werden solche aprotischen organischen Lösungsmittel ausgewählt, welche sich zusätzlich in einfacher Weise, beispielsweise durch Destillation, Inertgasstrippung und/oder Wasserdampfdestillation aus der erhaltenen Polymerisat A-Lösung abtrennen lassen. Bevorzugte Beispiele hierfür sind Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, oder Cyclohexanon. Besonders bevorzugte Lösungsmittel sind die genannten Ester aus aliphatischen C1- bis C5-Carbonsäuren oder aromatischen Carbonsäuren mit aliphatischen C1- bis C5-Alkoholen, insbesondere jedoch Essigsäureethylester und Buttersäureethylester sowie C4- bis C6-Ketone, insbesondere Methylethylketon. Günstig ist es, wenn das Löungsmittel bei Atmosphärendruck (1atm = 1,013 bar) einen Siedepunkt ≤ 140 °C, häufig ≤ 125 °C und insbesondere ≤ 100 °C aufweist oder mit Wasser ein niedrig siedendes Wasser/Lösungsmittel-Azeotropgemisch bildet. Selbstverständlich kann auch eine Mischung mehrerer Lösungsmittel eingesetzt werden.

Die Menge an Lösungsmittel bei der Herstellung des Polymerisats A beträgt 40 bis 9900 Gew.-Teile, bevorzugt 70 bis 400 Gew.-Teile und insbesondere bevorzugt 80 bis 200 Gew.-Teile, jeweils bezogen auf 100 Gew.-Teile Gesamtmonomeren.

Erfindungsgemäß ist es möglich, gegebenenfalls eine Teil- oder die Gesamtmenge an Lösungsmittel im Polymerisationsgefäß vorzulegen. Es ist aber auch möglich, die Gesamtmenge oder die gegebenenfalls verbliebene Restmenge an Lösungsmittel während der Polymerisationsreaktion zuzudosieren. Die Gesamtmenge oder die gegebenenfalls verbliebene Restmenge an Lösungsmittel kann dem Polymerisationsgefäß dabei diskontinuierlich in einer oder mehreren Portionen oder kontinuierlich mit gleichbleibenden oder sich verändernden Mengenströmen zudosiert werden. Vorteilhaft wird eine Teilmenge des Lösungsmittels als Polymerisationsmedium vor Initiierung der Polymerisationsreaktion im Polymerisationsgefäß vorgelegt und die verbliebene Restmenge gemeinsam mit den Monomeren A1 bis A4 und dem Radikalinitiator während der Polymerisationsreaktion zudosiert.

Die radikalische Polymerisation der Monomeren A1 bis A4 wird durch so genannte Radikalinitiatoren initiiert und aufrechterhalten. Als Radikalinitiatoren (radikalbildende Initiatoren) sind vorzugsweise alle diejenigen radikalbildenden Initiatoren geeignet, welche bei Polymerisationstemperatur eine Halbwertszeit ≤ 4 Stunden, insbesondere ≤ 1 Stunde und vorteilhaft ≤ 30 Minuten aufweisen.

Wird die Polymerisation der Monomeren A1 bis A4 in wässrigem Medium durchgeführt, werden so genannte wasserlösliche Radikalinitiatoren, welche der Fachmann üblicherweise bei der radikalisch initiierten wässrigen Emulsionspolymerisation verwendet, eingesetzt. Wird dagegen die Polymerisation der Monomeren in einem organischen Lösungsmittel durchgeführt, werden so genannte öllösliche Radikalinitiatoren, welche der Fachmann üblicherweise bei der radikalisch initiierten Lösungspolymerisation verwendet, eingesetzt.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis (tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat. Als gut öllösliche Azoinitiatoren finden beispielsweise 2,2'-Azobis(isobutyronitril), 2,2'-Azobis(2,4-dimethylvaleronitril) oder 4,4'-Azobis(4-cyanopentansäure) Verwendung.

Bevorzugt wird als öllöslicher Radikalinitiator eine Verbindung ausgewählt aus der Gruppe umfassend tert.-Butylperoxi-2-ethylhexanoat (Trigonox® 21; Trigonox® Marke der Fa. Akzo Nobel), tert.-Amylperoxi-2-ethylhexanoat (Trigonox® 121), tert.-Butylperoxibenzoat (Trigonox® C), tert.-Amylperoxibenzoat, tert.-Butylperoxiacetat (Tri-gonox® F), tert.-Butylperoxi-3,5,5-trimethylhexanoat (Trigonox® 42 S), tert.-Butylperoxiisobutanoat, tert.-Butylperoxidiethylacetat (Trigonox® 27), tert.-Butylperoxipivalat (Trigonox® 25), tert.-Butylperoxiisopropylcarbonat, (Trigonox® BPIC), 2,5-Dimethyl-2,5-di(tert.-butylperoxi)hexan (Trigonox® 101), Di-tert.-butylperoxid (Tri-gonox® B), Cumylhydroperoxid (Trigonox® K) und tert.-Butylperoxi-2-ethylhexylcarbonat (Trigonox® 117) eingesetzt. Selbstverständlich ist es auch möglich, Gemische vorgenannter öllöslicher Radikalinitiatoren einzusetzten.

Die Menge an eingesetztem Radikalinitiators beträgt in der Regel 0,01 bis 10 Gew.-%, bevorzugt 0,1 bis 8 Gew.-% und insbesondere bevorzugt 1 bis 6 Gew.-%, jeweils bezogen auf die Gesamtmonomerenmenge.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer Lösung des Radikalinitiators mit dem verwendeten Lösungsmittel.

Vorteilhaft weist Polymerisat A ein gewichtsmittleres Molekulargewicht ≥ 1000 g/mol und ≤ 100000 g/mol auf. Günstig ist es, wenn das gewichtsmittlere Molekulargewicht von Polymer A ≤ 50000 g/mol oder ≤ 40000 g/mol ist. Insbesondere vorteilhaft weist Polymer A ein gewichtsmittleres Molekulargewicht ≥ 3000 g/mol und ≤ 40000 g/mol auf. Mit besonderem Vorteil liegt das gewichtsmittleres Molekulargewicht im Bereich ≥ 3000 und ≤ 25000 g/mol. Die Einstellung des gewichtsmittleren Molekulargewichts bei der Herstellung von Polymerisat A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatograpie.

Geeignete Radikalkettenregler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Weitere Radikalkettenregler sind dem Fachmann geläufig. Falls die Polymerisation in Gegenwart von Radikalkettenreglern durchgeführt wird, werden häufig 0,01 bis 10 Gew.-%, bezogen auf die Gesamtmonomerenmenge, verwendet.

Erfindungsgemäß kann wenigstens eine Teilmenge des Radikalkettenreglers im Polymerisationsmedium vorgelegt werden und die gegebenenfalls verbliebene Restmenge dem Polymerisationsmedium nach Initiierung der radikalischen Polymerisationsreaktion diskontinuierlich in einer Portion, diskontinuierlich in mehreren Portionen sowie kontinuierlich mit gleich bleibenden oder sich verändernden Mengenströmen zugegeben werden. Häufig wird die Gesamtmenge des Radikalkettenreglers gemeinsam mit den Monomeren A1 bis A4 während der Polymerisationsreaktion kontinuierlich zugegeben.

Durch gezielte Variation von Art und Menge der Monomeren A1 bis A4 ist es dem Fachmann erfindungsgemäß möglich, Polymerisate A herzustellen, die eine Glasübergangstemperatur bzw. einen Schmelzpunkt im Bereich von -60 bis 270 °C aufweisen. Erfindungsgemäß vorteilhaft beträgt die Glasübergangstemperatur des Polymerisats A ≥ -20 °C und ≤ 110 °C und bevorzugt ≥ 20 °C und ≤ 105 °C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäß erhaltenen Polymerisat-A-Lösungen weisen üblicherweise Polymerisatfeststoffgehalte von ≥ 10 und ≤ 70 Gew.-%, häufig ≥ 20 und ≤ 65 Gew.-% und oft ≥ 40 und ≤ 60 Gew.-%, jeweils bezogen auf die entsprechende Polymerisat-A-Lösung auf.

Die radikalisch initiierte Polymerisation erfolgt - abhängig vom verwendeten Radikalinitiator - üblicherweise bei Temperaturen im Bereich von 40 bis 180 °C, vorzugsweise von 50 bis 150 °C und insbesondere von 60 bis 110 °C. Sobald die Temperatur bei der Polymerisationsreaktion oberhalb des Siedepunktes des Lösungsmittels und/oder einem der Monomeren A1 bis A4 liegt, wird die Polymerisation vorteilhaft unter Druck (> 1 atm absolut) durchgeführt. Die Temperatur- und Druckbedingungen sind dem Fachmann geläufig oder können von diesem in wenigen Routineversuchen ermittelt werden.

Die Herstellung der Polymerisate A kann in den üblichen Polymerisationsvorrichtungen erfolgen. Hierzu verwendet man beispielsweise Glaskolben (Labor) oder Rührkessel (technischer Maßstab), die mit einem Anker-, Blatt-, Impeller-, Kreuzbalken-, MIG- oder Mehrstufenimpulsgegenstromrührer ausgestattet sind. Insbesondere bei der Polymerisation in Anwesenheit lediglich kleiner Mengen an Lösungsmittel kann es auch vorteilhaft sein, die Polymerisation in üblichen ein- oder zweiwelligen (gleich- oder gegenläufig) Kneterreaktoren, wie beispielsweise solchen der Fa. List oder Buss SMS durchzuführen.

Erfolgt die Herstellung von Polymerisat A in einem organischen Lösungsmittel, so wird in der Regel das organische Lösungsmittel zumindest teilweise, vorteilhaft zu ≥ 50 Gew.-% oder≥ 90 Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck (< 1atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist.

Erfindungsgemäß umfasst ist daher auch ein Polymerisat A, welches durch radikalische Polymerisation von

| | |
|---|---|
| 0,1 bis 40 Gew.-% | wenigstens eines Monomeren A1, |
| 40 bis 99,9 Gew.-% | wenigstens eines Monomeren A2, |
| 0 bis 50 Gew.-% | wenigstens eines Monomeren A3, und |
| 0 bis 30 Gew.-% | wenigstens eines Monomeren A4, |

erhältlich ist, wobei sich die Monomeren A1 bis A4 zu 100 Gew.-% addieren.

Erfindungsgemäß ebenfalls umfasst ist daher auch ein wässriges Bindemittel, enthaltend

a) ein Polymerisat A, welches durch radikalische Polymerisation von

| | |
|---|---|
| 0,1 bis 40 Gew.-% | wenigstens eines Monomeren A1, |
| 40 bis 99,9 Gew.-% | wenigstens eines Monomeren A2, |
| 0 bis 50 Gew.-% | wenigstens eines Monomeren A3, und |
| 0 bis 30 Gew.-% | wenigstens eines Monomeren A4, |

erhalten wurde, wobei sich die Monomeren A1 bis A4 zu 100 Gew.-% addieren, und

b) eine Polyolverbindung mit wenigstens 2 Hydroxylgruppen (Polyol B).

Das erfindungsgemäß verwendete wässrige Bindemittel enthält neben dem Polymerisat A noch ein Polyol B, welches wenigstens 2 Hydroxylgruppen aufweist. Dabei werden vorteilhaft solche Polyole B verwendet, die bei den Temperaturen der Trocknung bzw. Aushärtung nicht flüchtig sind und daher einen entsprechend niedrigen Dampfdruck aufweisen.

Dabei kann das Polyol B prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer polymerer Polyole B finden sich u.a. in WO 97/45461, Seite 3, Zeile 3 bis Seite 14, Zeile 33.

Als Polyol B mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,4- bzw. 1,3-Dihydroxybenzol, 1,2,3-Trihydroxybenzol, 1,2-, 1,3- bzw. 1,4-Dihydroxycyclohexan sowie bevorzugt Alkanolamine, wie beispielsweise Verbindungen der allgemeinen Formel I

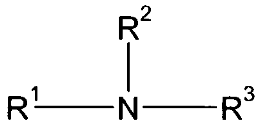

(I),

in der $R^1$ für ein H-Atom, eine $C_1$-$C_{10}$-Alkylgruppe oder eine $C_2$-$C_{10}$-Hydroxyalkylgruppe steht und $R^2$ und $R^3$ für eine $C_2$-$C_{10}$-Hydroxyalkylgruppe stehen.

Besonders bevorzugt stehen $R^2$ und $R^3$ unabhängig voneinander für eine $C_2$-$C_5$-Hydroxyalkylgruppe und $R^1$ für ein H-Atom, eine $C_1$-$C_5$-Alkylgruppe oder eine $C_2$-$C_5$-Hydroxyalkylgruppe.

Als Verbindungen der Formel I seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer Polyole B mit einem Molekulargewicht ≤ 1000 g/mol finden sich ebenfalls in WO 97/45461, Seite 3, Zeile 3 bis Seite 14, Zeile 33.

Bevorzugt wird das Polyol B ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere besonders bevorzugt ist.

Bei den erfindungsgemäß einsetzbaren wässrigen Bindemittel werden das Polymerisat A und das Polyol B bevorzugt in einem solchen Mengenverhältnis zueinander eingesetzt, dass das Gewichtsverhältnis von Polymerisat A zu Polyol B 1:10 bis 100:1, vorteilhaft 1:5 bis 50:1 und insbesondere vorteilhaft 1:1 bis 10:1 beträgt.

Insbesondere vorteilhaft werden die Mengen an Polymerisat A und Polyol B so gewählt, dass das Verhältnis der Anzahl von Äquivalenten Carboxylgruppen des Polymerisats A zu der Anzahl von Äquivalenten Hydroxylgruppen

des Polyols B 100:1 bis 1:3, bevorzugt 50:1 bis 1:2 und besonders bevorzugt 10:1 bis 1:1 beträgt (wobei die Anhydridgruppen hierbei als 2 Carboxylgruppen berechnet werden).

Die Herstellung der erfindungsgemäß einsetzbaren wässrigen Bindemittel ist dem Fachmann geläufig und erfolgt beispielsweise in einfacher Weise durch Zugabe des Polyols B zur wässrigen Lösung des Polymerisats A.

Die vorgenannten wässrigen Bindemittel enthalten vorzugsweise weniger als 1,5 Gew.-%, insbesondere weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus Polymerisat A und Polyol B (fest/fest) eines Phosphor enthaltenden Reaktionsbeschleunigers. Phosphor enthaltende Reaktionsbeschleuniger sind beispielsweise in EP-A 583086 und EP-A 651088 offenbart. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die wässrigen Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch dem Fachmann geläufige Veresterungskatalysator enthalten, wie beispielsweise Schwefelsäure oder p-Toluolsulfonsäure bzw. Titanate oder Zirkonate.

Desweiteren können die erfindungsgemäßen wässrigen Bindemittel auch weitere, dem Fachmann geläufige optionale Hilfsstoffe, wie beispielsweise sogenannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Sollen die erfindungsgemäßen wässrigen Bindemittel als Bindemittel für Mineralfasern und/oder Glasfasern bzw. daraus hergestellte Vliese eingesetzt werden, so wird den wässrigen Bindemitteln vorteilhaft ≥ 0,001 und ≤ 5 Gew.-% und insbesondere vorteilhaft ≥ 0,05 und ≤ 2 Gew.-%, bezogen auf die Gesamtmenge an Polymerisat A und Polyol B, wenigstens eines siliziumhaltigen Haftvermittlers, beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, 3-Glycidyloxypropyltrimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, 3-Glycidyloxypropyltrimethoxysilan und/oder 3-Mercaptopropyltrimethoxysilan besonders bevorzugt sind.

Die erfindungsgemäß einsetzbaren wässrigen Bindemittel weisen üblicherweise Feststoffgehalte (gebildet aus der Summe an Polymerisat A und Polyol B als Feststoff gerechnet) von ≥ 5 und ≤ 70 Gew.-%, häufig ≥ 10 und ≤ 65 Gew.-% und oft ≥ 15 und ≤ 55 Gew.-%, jeweils bezogen auf das wässrige Bindemittel auf.

Die erfindungsgemäß einsetzbaren wässrigen Bindemittel weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 3 und ≤ 5 auf. Dabei können zur Einstellung des pH-Wertes alle dem Fachmann geläufige basische Verbindungen eingesetzt werden. Vorteilhaft werden jedoch solche basischen Verbindungen verwendet, die bei den Temperaturen während der Trocknung bzw. Aushärtung nicht flüchtig sind, wie beispielsweise Natriumhydroxid, Kaliumhydroxid oder Natriumcarbonat.

Die vorgenannten wässrigen Bindemittel eignen sich vorteilhaft zur Verwendung als Bindemittel für faserförmige und körnige Substrate. Mit Vorteil lassen sich die genannten wässrigen Bindemittel daher bei der Herstellung von Formkörpern aus faserförmigen und körnigen Substraten einsetzen.

Faserförmige und/oder körnige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel oder Sand sowie andere organische oder anorganische natürliche und/oder synthetische faserförmige und/oder körnige Verbindungen, deren längste Ausdehnung im Falle von körnigen Substraten ≤ 10 mm, bevorzugt ≤5 mm und insbesondere ≤ 2 mm beträgt. Selbstverständlich soll der Begriff Substrat auch die aus Fasern erhältlichen Faservliese, wie beispielsweise so genannte genadelte Faservliese mit umfassen. Insbesondere vorteilhaft ist das erfindungsgemäße wässrige Bindemittel als formaldehydfreies Bindemittelsystem für die vorgenannten Fasern bzw. daraus gebildete Faservliese geeignet.

Das Verfahren zur Herstellung eines Formkörpers aus einem faserförmigen und/oder körnigen Substrat und dem vorgenannten wässrigen Bindemittel erfolgt vorteilhaft dergestalt, dass das faserförmige und/oder körnige Substrat mit dem wässrigen Bindemittel zuerst imprägniert, das imprägnierte Substrat gegebenenfalls in die gewünschte Form gebracht und daran anschließend das imprägnierte Substrat getrocknet und bei einer Temperatur ≥ 130 °C ausgehärtet wird.

Anspruch 15 definiert eine bevorzugte Ausführungs form des Verfahrens

Die Imprägnierung der faserförmigen und/oder körnigen Substrate erfolgt in der Regel dergestalt, dass das vorgenannte wässrige Bindemittel gleichmäßig auf die Oberfläche der faserförmigen und/oder körnigen Substrate aufgebracht wird. Dabei wird die Menge an wässrigem Bindemittel so gewählt, dass pro 100 g faserförmigem und/oder körnigem Substrat ≥1 g und ≤ 100 g, bevorzugt ≥ 2 g und ≤ 50 g und insbesondere bevorzugt ≥ 5 g und ≤ 30 g Bindemittel, gebildet aus der Summe an Polymerisat A und Polyol B (als Feststoff gerechnet) eingesetzt werden. Die Imprägnierung der faserförmigen und/oder körnigen Substrate ist dem Fachmann geläufig und erfolgt beispielsweise durch Tränkung oder durch Besprühen der faserförmigen und/oder körnigen Substrate.

Nach der Imprägnierung wird das faserförmige und/oder körnige Substrat gegebenenfalls) in die gewünschte Form gebracht, beispielsweise durch Einbringen in eine beheizbare Presse oder Form. Daran anschließend wird das in Form gebrachte imprägnierte faserförmige und/oder körnige Substrat in einer dem Fachmann geläufigen Art und Weise getrocknet und ausgehärtet.

Häufig erfolgt die Trocknung bzw. Aushärtung des gegebenenfalls in Form gebrachten imprägnierten faserförmigen und/oder körnigen Substrats in zwei Temperaturstufen, wobei die Trocknungsstufe bei einer Temperatur < 130 °C, bevorzugt ≥ 20 °C und ≤ 120 °C und insbesondere bevorzugt ≥ 40 und ≤ 100 °C und die Aushärtungsstufe bei einer Temperatur ≥ 130 °C, bevorzugt ≥ 150 und ≤ 250 °C und insbesondere bevorzugt ≥ 180 °C und ≤ 220 °C erfolgt.

Die Trocknungsstufe erfolgt dabei vorteilhaft dergestalt, dass bei einer Temperatur ≤ 100 °C so lange getrocknet wird, bis das in Form gebrachte imprägnierte faserförmige und/oder körnige Substrat, welches häufig noch nicht seine endgültige Form aufweist (sogenanntes Halbzeug) eine Restfeuchte ≤ 15 Gew.-%, bevorzugt ≤ 12 Gew.-% und insbesondere bevorzugt ≤ 10 Gew.-% aufweist. Dabei wird die Restfeuchte bestimmt, indem zuerst das erhaltene Halbzeug bei Raumtemperatur gewogen, dieses daran anschließend für 2 Minuten auf 130 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang, bezogen auf das Gewicht des Halbzeugs vor dem Trocknungsvorgang multipliziert mit dem Faktor 100.

Das so erhaltene Halbzeug ist nach Erwärmen auf eine Temperatur ≥ 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 130 °C solange erhitzt wird, bis dieses eine Restfeuchte ≤ 3 Gew.-%, bevorzugt ≤ 1 Gew.-% und insbesondere bevorzugt ≤ 0,5 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper gemäß Anspuch 16 weisen vorteilhafte Eigenschaften, insbesondere eine verbesserte Reißfestigkeit im nassen bzw. heißem Zustand im Vergleich zu den Formkörpern des Standes der Technik auf.

Die Erfindung soll anhand nachfolgender nicht einschränkender Beispiele erläutert werden.

Beispiele

A. Herstellung des Polymerisats A

Beispiel 1 (B1)

In einen 2 l-Vierhalskolben, ausgerüstet mit einem Anker-Rührer, Rückflusskühler und zwei Dosiereinrichtungen, wurden bei 20 bis 25 °C (Raumtemperatur) 200,0 g Methylethylketon (MEK) und 171,1 g Maleinsäureanhydrid (MSA) unter Stickstoffatmosphäre vorgelegt. Daran anschließend wurde die Vorlagenlösung unter Rühren auf 82 °C aufgeheizt und zeitgleich beginnend Zulauf 1 innerhalb von 5 Stunden und Zulauf 2 innerhalb von 5,5 Stunden kontinuierlich mit gleich bleibenden Mengenströmen zudosiert. Daran anschließend ließ man die Reaktionsmischung noch 2 Stunden bei vorgenannter Temperatur nachpolymerisieren und kühlte dann die erhaltene Polymerlösung auf Raumtemperatur ab.

<u>Zulauf 1:</u>

| | |
|---|---|
| 440,3 g | Acrylsäure (AS) |
| 32,2 g | Dodecen-1 und |
| 217,0 g | MEK |

Zulauf 2:

| | |
|---|---|
| 42,9 g | einer 75 gew.-%igen Lösung von t-Butylperpivalat in einem aromatenfreien Kohlenwasserstoffgemisch (Fa. Akzo Nobel) und |
| 183,7 g | MEK |

Daran anschließend verdünnte man 1000 g der erhaltenen organischen Polymerisatlösung mit 800 g entionisiertem Wasser und destillierte MEK bei einer Temperatur von 110-115 °C unter Atmosphärendruck (1 atm = 1,013 bar absolut) durch Einleiten von Wasserdampf während 5 Stunden ab. Danach stellte man durch Zugabe von entionisiertem Wasser ein Feststoffgehalt von 54 Gew.-% ein. Der K-Wert von des Polymerisats A wurde zu 19,1 und das gewichtsmittlere Molekulargewicht zu 13100 g/mol bestimmt.

Der Feststoffgehalt wurde generell bestimmt, indem eine Probe von ca. 1 g in einem Umluft-Trockenschrank für zwei Stunden bei 120 °C getrocknet wurde. Es wurden jeweils zwei separate Messungen durchgeführt. Die in den Beispielen angegebenen Werte stellen Mittelwerte der beiden Messergebnisse dar.

Der K-Wert des Polymerisats A wurde nach Fikentscher (ISO 1628-1) mittels einer 1 gew.-%igen Polymerlösung bestimmt.

Die Ermittlung des gewichtsmittleren Molekulargewichts des Polymerisats A erfolgte mittels Gelpermeationschromatographie (Linearsäule: Supremea M der Fa. PSS, Eluens: 0,08 mol/l TRIS-Puffer pH 7,0, entionisiertes Wasser, Flüssigkeitsstrom: 0,8 ml/min, Detektor: Differentialrefraktometer ERC 7510 der Fa. ERC).

Beispiel 2 (B2)

In einen 2 l-Vierhalskolben, ausgerüstet mit einem Anker-Rührer, Rückflusskühler und drei Dosiereinrichtungen, wurden bei Raumtemperatur unter Stickstoffatmosphäre 200,0 g MEK und 51,3 g MSA vorgelegt. Daran anschließend wurde die Vorlagenlösung unter Rühren auf 82 °C aufgeheizt und zeitgleich beginnend Zulauf 1 innerhalb von 3 Stunden, Zulauf 2 innerhalb von 5 Stunden und Zulauf 3 innerhalb von 5,5 Stunden kontinuierlich mit gleich bleibenden Mengenströmen zudosiert. Daran anschließend ließ man die Reaktionsmischung noch 2 Stunden bei vorgenannter Temperatur nachpolymerisieren und kühlte dann die erhaltene Polymerlösung auf Raumtemperatur ab.

Zulauf 1:

| | |
|---|---|
| 119,8 g | MSA (in geschmolzener Form) |

Zulauf 2:

| | |
|---|---|
| 376,0 g | AS |
| 96,5 g | 1-Octen und |
| 217,0 g | MEK |

Zulauf 3:

| | |
|---|---|
| 42,9 g | einer 75 gew.-%igen Lösung von t-Butylperpivalat in einem aromatenfreien Kohlenwasserstoffgemisch und |
| 183,7 g | MEK |

Daran anschließend verdünnte man 1200 g der erhaltenen organischen Polymerisatlösung mit 700 g entionisiertem Wasser und destillierte am Rotationsverdampfer bei 80 °C Badtemperatur solange Wasser/MEK ab, bis ein Innendruck von 20 mbar (absolut) erreicht war. Danach stellte man durch Zugabe von entionisiertem Wasser ein Festoffgehalt von 50 Gew.-% ein. Der K-Wert von des Polymerisats A wurde zu 15,0 und das gewichtsmittlere Molekulargewicht zu 11700 g/mol bestimmt.

Beispiel 3 (B3)

Die Durchführung von Beispiel 3 erfolgte analog Beispiel 2 mit dem Unterschied, dass als Zulauf 2 343,8 g AS, 128,7 g 1-Octen und 217,0 g MEK eingesetzt wurden.

Durch Zugabe von entionisiertem Wasser wurde ein Festoffgehalt von 48,5 Gew.-% eingestellt. Der K-Wert von des Polymerisats A wurde zu 14,3 und das gewichtsmittlere Molekulargewicht zu 8300 g/mol bestimmt.

Vergleichsbeispiel 1 (V1)

Die Herstellung von Vergleichsbeispiel 1 erfolgte analog Beispiel 1 mit dem Unterschied, dass unter Konstanthaltung der Gesamtmonomerenmenge und des AS/MSA-Verhältnisses (2,57) 181,1 g MSA im Polymerisationsgefäß vorgelegt wurden und Zulauf 1 ausschließlich aus 463,5 g AS und 217,0 g MEK bestand.

Durch Zugabe von entionisiertem Wasser wurde ein Festoffgehalt von 42,5 Gew.-% eingestellt. Der K-Wert des Polymerisats wurde zu 17,2 und das gewichtsmittlere Molekulargewicht zu 11100 g/mol bestimmt.

Vergleichsbeispiel 2 (V2)

Die Herstellung von Vergleichsbeispiel 2 erfolgte analog Beispiel 2 mit dem Unterschied, dass unter Konstanthaltung der Gesamtmonomerenmenge und des AS/MSA-Verhältnisses (2,20) 201,3 g MSA im Polymerisationsgefäß vorgelegt wurden und Zulauf 1 ausschließlich aus 442,3 g AS und 217,0 g MEK bestand.

Durch Zugabe von entionisiertem Wasser wurde ein Festoffgehalt von 44,2 Gew.-% eingestellt. Der K-Wert des Polymerisats wurde zu 16,8 und das gewichtsmittlere Molekulargewicht zu 15200 g/mol bestimmt.

Vergleichsbeispiel 3 (V3)

Die Herstellung von Vergleichsbeispiel 3 erfolgte analog Beispiel 3 mit dem Unterschied, dass unter Konstanthaltung der Gesamtmonomerenmenge und des AS/MSA-Verhältnisses (2,01) 213,9 g MSA im Polymerisationsgefäß vorgelegt wurden und Zulauf 1 ausschließlich aus 429,7 g AS und 217,0 g MEK bestand.

Durch Zugabe von entionisiertem Wasser wurde ein Festoffgehalt von 42,7 Gew.-% eingestellt. Der K-Wert von des Polymerisats wurde zu 16,7 und das gewichtsmittlere Molekulargewicht zu 14900 g/mol bestimmt.

B. Anwendungstechnische Untersuchungen

Es wurden Glasfaservliese der Größe 32 x 28 cm mit einem Flächengewicht von 60 g/m$^2$ der Fa. Schuller GmbH, Wertheim, eingesetzt.

Den gemäß den Beispielen und Vergleichsbeispielen erhaltenen wässrigen Polymerlösungen B1 bis B3 sowie V1 bis V3 wurden bei Raumtemperatur und unter Rühren soviel Triethanolamin zugesetzt, dass die wässrigen Lösungen pro 100 Gewichtsteilen Polymerisat 30 Gewichtsteile Triethanolamin enthielten. Anschließend wurden diesen Lösungen ebenfalls bei Raumtemperatur und unter Rühren 1 Gew.-Teil 3-Aminopropyltriethoxysilan, bezogen auf 100 Gewichtsteilen Bindemittel, gebildet aus den Mengen an Polymerisat und dem Triethanolamin (fest/fest), zugegeben und die erhaltenen wässrigen Bindemittellösungen mit entionisiertem Wasser auf einen Feststoffgehalt von 25 Gew.-% verdünnt. Danach wurden die Glasfaservliese in Längsrichtung über ein Endlos-PES-Siebband mit einer Bandlaufgeschwindigkeit von 60 cm pro Minute durch die vorgenannten 25 gew.-%igen wässrigen Bindemittelflotten geleitet. Durch anschließende Absaugung des wässrigen Bindemittels wurde der Nassauftrag auf 48 g/m$^2$ (entsprechend 12 g/m$^2$ Bindemittel als Feststoff gerechnet) eingestellt. Die so erhaltenen imprägnierten Glasfaservliese wurden auf einen Kunststoffnetz als Träger entweder für 2 Minuten bei 180 °C oder für 2 Minuten bei 200 °C in einem Mathis-Ofen bei maximalem Heißluftstrom getrocknet/ausgehärtet. Nach dem Abkühlen auf Raumtemperatur wurden Prüfstreifen mit einer Größe von 240 x 50 mm in Faserlängsrichtung geschnitten. Die erhaltenen Prüfstreifen wurden anschließend für 24 Stunden bei 23 °C und 50 % relativer Luftfeuchtigkeit im Klimaraum gelagert. Die in Abhängigkeit von der für das wässrige Bindemittel eingesetzten Polymerlösung erhaltenen Glasfaservliesprüfstreifen werden im folgenden Prüfstreifen B1, B2, B3, V1, V2 sowie V3 bezeichnet.

Bestimmung der Reißkraft bei 23 °C

Die Bestimmung der Reißkraft erfolgte an einer Zugprüfmaschine der Firma Zwick-Roell, Typ Z005. Die Prüfstreifen B1, B2, B3, V1, V2 sowie V3 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegengesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 Messungen. Die in Tabelle 1 angegebenen Werte stellen jeweils den Mittelwert dieser Messungen dar.

Bestimmung der Nassreißkraft

Die Bestimmung der Nassreißkraft erfolgte analog der Bestimmung der Reißkraft bei 23 °C mit dem Unterschied, dass die jeweiligen Prüfstreifen zuvor für 15 Minuten bei 80 °C in entionisiertem Wasser gelagert und überschüssiges

Wasser vor der Messung mit einem Baumwollgewebe abgetupft wurde. Die erhaltenen Ergebnisse sind ebenfalls in Tabelle 1 zusammengefasst.

Tabelle 1: Zusammenfassung der Ergebnisse

| | Aushärtung bei 180 °C | | Aushärtung bei 200 °C | |
|---|---|---|---|---|
| Prüfstreifen | Reißkraft 23 °C [N/50mm] | Nassreißkraft [N/50mm] | Reißkraft 23 °C [N/50mm] | Nassreißkraft [N/50mm] |
| B1 | 217 | 113 | 213 | 166 |
| B2 | 215 | 138 | 212 | 168 |
| B3 | 212 | 142 | 211 | 161 |
| V1 | 194 | 86 | 187 | 132 |
| V2 | 198 | 83 | 198 | 139 |
| V3 | 189 | 82 | 198 | 142 |

Aus den Ergebnissen ist klar ersichtlich, dass die unter Verwendung der erfindungsgemäßen wässrigen Bindemittel erhaltenen Prüfstreifen ein deutlich verbessertes Reißkraft- bzw. Nassreißkraftverhalten aufweisen.

## Patentansprüche

1. Verwendung eines wässrigen Bindemittels, enthaltend

a) ein Polymerisat A, welches durch radikalische Polymerisation von

0,1 bis 40 Gew.-% wenigstens eines C3- bis C30-Alkens (Monomer A1),
40 bis 99,9 Gew.-% wenigstens einer ethylenisch ungesättigten C3- bis C6- Monocarbonsäure (Monomer A2),
0 bis 50 Gew.-% wenigstens einer ethylenisch ungesättigten C4- bis C12-Dicarbonsäure und/oder der daraus zugänglichen ethylenisch ungesättigten Dicarbonsäuremonoalky- lester oder Dicarbonsäureanhydride (Monomer A3), und
0 bis 30 Gew.-% wenigstens einer anderen ethylenisch ungesättigten Verbindung, welche mit den Monomeren A1 bis A3 co- polymerisierbar ist (Monomer A4),

erhalten wurde, wobei sich die Monomeren A1 bis A4 zu 100 Gew.-% addieren, und
b) eine Polyolverbindung mit wenigstens 2 Hydroxylgruppen (Polyol B),
als Bindemittel für faserförmige und/oder körnige Substrate.

2. Verwendung nach Anspruch 1, wobei das Gewichtsverhältnis von Polymerisat A zu Polyol B 1:10 bis 100:1 beträgt.

3. Verwendung nach einem der Ansprüche 1 oder 2, wobei das Polymerisat A durch radikalische Polymerisation von

1 bis 25 Gew.-% Monomere A1,
50 bis 89 Gew.-% Monomere A2, und
10 bis 40 Gew.-% Monomere A3

erhalten wurde.

4. Verwendung nach einem der Ansprüche 1 bis 3, wobei die Monomeren A1 ausgewählt sind aus 1-Alkenen mit 6 bis 18 Kohlenstoffatomen.

5. Verwendung nach einem der Ansprüche 1 bis 4, wobei die Monomeren A2 ausgewählt sind aus Acrylsäure, Methacrylsäure, Ethylacrylsäure, Allylessigsäure, Crotonsäure und/oder Vinylessigsäure.

6. Verwendung nach einem der Ansprüche 1 bis 5, wobei die Monomeren A3 ausgewählt sind aus Maleinsäureanhydrid, Methylmaleinsäureanhydrid, Maleinsäuremonomethylester, Itakonsäure, Itakonsäureanhydrid, 1,2,3,6-Tetrahydrophthalsäure und/oder 1,2,3,6-Tetrahydrophthalsäureanhydrid.

**7.** Verwendung nach einem der Ansprüche 1 bis 6, wobei das Polymerisat A ein gewichtsmittleres Molekulargewicht ≥ 3000 g/mol und ≤ 40000 g/mol aufweist.

**8.** Verwendung nach einem der Ansprüche 1 bis 7, wobei das Polymerisat A eine Glasübergangstemperatur ≥ 20 und ≤ 105 °C aufweist.

**9.** Verwendung nach einem der Ansprüche 1 bis 8, wobei das Polyol B eine Alkanolaminverbindung ist.

**10.** Verwendung nach einem der Ansprüche 1 bis 9, wobei das Polyol B ausgewählt ist aus Diethanolamin, Triethanolamin, Diisopropanolamin, Triisopropanolamin, Methyldiethanolamin, Butyldiethanolamin und/oder Methyldiisopropanolamin.

**11.** Verwendung nach einem der Ansprüche 1 bis 10, wobei die Mengen an Polymerisat A und Polyol B so gewählt werden, dass das Verhältnis der Anzahl von Äquivalenten Carboxylgruppen des Polymerisats A zu der Anzahl von Äquivalenten Hydroxylgruppen des Polyols B 100:1 bis 1:3 ist.

**12.** Polymerisat A, erhältlich durch radikalische Polymerisation von

0,1 bis 40 Gew.-% wenigstens eines Monomeren A1,
40 bis 99,9 Gew.-% wenigstens eines Monomeren A2,
0 bis 50 Gew.-% wenigstens eines Monomeren A3, und
0 bis 30 Gew.-% wenigstens eines Monomeren A4,

wobei sich die Monomeren A1 bis A4 zu 100 Gew.-% addieren.

**13.** Wässriges Bindemittel, enthaltend

a) ein Polymerisat A, welches durch radikalische Polymerisation von

0,1 bis 40 Gew.-% wenigstens eines Monomeren A1,
40 bis 99,9 Gew.-% wenigstens eines Monomeren A2,
0 bis 50 Gew.-% wenigstens eines Monomeren A3, und
0 bis 30 Gew.-% wenigstens eines Monomeren A4,

erhalten wurde, wobei sich die Monomeren A1 bis A4 zu 100 Gew.-% addieren, und
b) eine Polyolverbindung mit wenigstens 2 Hydroxylgruppen (Polyol B).

**14.** Verfahren zur Herstellung eines Formkörpers aus einem faserförmigen und/oder körnigen Substrat und einem wässrigen Bindemittel, **dadurch gekennzeichnet, dass** das faserförmige und/oder körnige Substrat mit einem wässrigen Bindemittel gemäß Anspruch 13 zuerst imprägniert, das imprägnierte Substrat gegebenenfalls in die gewünschte Form gebracht und daran anschließend das imprägnierte Substrat getrocknet und bei einer Temperatur ≥ 130 °C ausgehärtet wird.

**15.** Verfahren nach Anspruch 14, **dadurch gekennzeichnet, dass** die Menge an wässrigem Bindemittel so gewählt wird, dass pro 100 g faserförmigem und/oder körnigem Substrat ≥ 1 g und ≤ 100 g Bindemittel, gebildet aus der Summe an Polymerisat A und Polyol B (als Feststoff gerechnet), eingesetzt werden.

**16.** Formkörper erhältlich nach einem Verfahren gemäß Anspruch 14 oder 15.

**Claims**

**1.** The use of an aqueous binder comprising

a) an addition polymer A obtained by free-radical polymerization of

0.1% to 40% by weight of at least one C3 to C30 alkene (monomer A1),
40% to 99.9% by weight of at least one ethylenically unsaturated C3 to C6 monocarboxylic acid (monomer

A2),
0% to 50% by weight of at least one ethylenically unsaturated C4 to C12 dicarboxylic acid and/or of the ethylenically unsaturated dicarboxylic monoalkyl esters or dicarboxylic anhydrides obtainable from said acid (monomer A3), and
0% to 30% by weight of at least one other ethylenically unsaturated compound which is copolymerizable with the monomers A1 to A3 (monomer A4),

the monomers A1 to A4 adding up to 100% by weight, and
b) a polyol compound having at least 2 hydroxyl groups (polyol B)

as a binder for fibrous and/or granular substrates.

2. The use according to claim 1, the weight ratio of polymer A to polyol B being 1:10 to 100:1.

3. The use according to either of claims 1 and 2, the polymer A having been obtained by free-radical polymerization of

| | |
|---|---|
| 1% to 25% by weight | of monomers A1, |
| 50% to 89% by weight | of monomers A2, and |
| 10% to 40% by weight | of monomers A3. |

4. The use according to any one of claims 1 to 3, the monomers A1 being selected from 1-alkenes having 6 to 18 carbon atoms.

5. The use according to any one of claims 1 to 4, the monomers A2 being selected from acrylic acid, methacrylic acid, ethyl acrylic acid, allyl acetic acid, crotonic acid and/or vinyl acetic acid.

6. The use according to any one of claims 1 to 5, the monomers A3 being selected from maleic anhydride, methylmaleic anhydride, maleic monomethyl ester, itaconic acid, itaconic anhydride, 1,2,3,6-tetrahydrophthalic acid and/or 1,2,3,6-tetrahydrophthalic anhydride.

7. The use according to any one of claims 1 to 6, the polymer A having a weight-average molecular weight ≥ 3000 g/mol and ≤ 40 000 g/mol.

8. The use according to any one of claims 1 to 7, the polymer A having a glass transition temperature ≥ 20 and ≤ 105°C.

9. The use according to any one of claims 1 to 8, the polyol B being an alkanolamine compound.

10. The use according to any one of claims 1 to 9, the polyol B being selected from diethanolamine, triethanolamine, diisopropanolamine, triisopropanolamine, methyldiethanolamine, butyldiethanolamine and/or methyldiisopropanolamine.

11. The use according to any one of claims 1 to 10, the amounts of polymer A and polyol B being chosen such that the ratio of the number of equivalents of carboxyl groups of the polymer A to the number of equivalents of hydroxyl groups of the polyol B is 100:1 to 1:3.

12. An addition polymer A obtainable by free-radical polymerization of
0.1% to 40% by weight of at least one monomer A1,
40% to 99.9% by weight of at least one monomer A2,
0% to 50% by weight of least one monomer A3, and
0% to 30% by weight of at least one monomer A4,
the monomers A1 to A4 adding up to 100% by weight.

13. An aqueous binder comprising

a) an addition polymer A obtained by free-radical polymerization of
0.1% to 40% by weight of at least one monomer A1,

40% to 99.9% by weight of at least one monomer A2,
0% to 50% by weight of at least one monomer A3, and
0% to 30% by weight of at least one monomer A4,
the monomers A1 to A4 adding up to 100% by weight, and
b) a polyol compound having at least 2 hydroxyl groups (polyol B).

**14.** A process for producing a shaped article from a fibrous and/or granular substrate and an aqueous binder, which comprises first impregnating the fibrous and/or granular substrate with an aqueous binder according to claim 13, bringing the impregnated substrate, if appropriate, into the desired shape, and subsequently drying the impregnated substrate and curing it at a temperature ≥ 130°C.

**15.** The process according to claim 14, wherein the amount of aqueous binder is chosen such that ≥ 1 g and ≤ 100 g of binder, formed from the sum of polymer A and polyol B (calculated as solid), are used per 100 g of fibrous and/or granular substrate.

**16.** A shaped article obtainable by a process according to claim 14 or 15.

## Revendications

**1.** Utilisation d'un liant aqueux, contenant

a) un polymérisat A, qui a été obtenu par polymérisation radicalaire de

0,1 à 40 % en poids d'au moins un alcène en $C_3$-$C_{30}$ (monomère A1),
40 à 99,9 % en poids d'au moins un acide monocarboxylique en $C_3$-$C_6$ à insaturation éthylénique (monomère A2),
0 à 50 % en poids d'au moins un acide dicarboxylique en $C_4$-$C_{12}$ à insaturation éthylénique et/ou des dicarboxylates de monoalkyle ou anhydrides d'acides dicarboxyliques, à insaturation éthylénique, pouvant être obtenus à partir d'un tel acide (monomère A3), et
0 à 30 % en poids d'au moins un autre composé à insaturation éthylénique, qui est polymérisable avec les monomères A1 à A3 (monomère A4), la somme des monomères A1 à A4 étant égale à 100 % en poids, et

b) un composé polyol comportant au moins 2 groupes hydroxy (polyol B),

en tant que liant pour des substrats fibreux et/ou granulaires.

**2.** Utilisation selon la revendication 1, dans laquelle le rapport pondéral du polymérisat A au polyol B vaut de 1:10 à 100:1.

**3.** Utilisation selon la revendication 1 ou 2, dans laquelle le polymérisat A a été obtenu par polymérisation radicalaire de

| | |
|---|---|
| 1 à 25 % en poids | de monomère A1, |
| 50 à 89 % en poids | de monomère A2, et |
| 10 à 40 % en poids | de monomère A3. |

**4.** Utilisation selon l'une quelconque des revendications 1 à 3, dans laquelle les monomères A1 sont choisis parmi des 1-alcènes ayant de 6 à 18 atomes de carbone.

**5.** Utilisation selon l'une quelconque des revendications 1 à 4, dans laquelle les monomères A2 sont choisis parmi l'acide acrylique, l'acide méthacrylique, l'acide éthylacrylique, l'acide allylacétique, l'acide crotonique et/ou l'acide vinylacétique.

**6.** Utilisation selon l'une quelconque des revendications 1 à 5, dans laquelle les monomères A3 sont choisis parmi l'anhydride maléique, l'anhydride méthylmaléique, le maléate de monométhyle, l'acide itaconique, l'anhydride itaconique, l'acide 1,2,3,6-tétrahydrophtalique et/ou l'anhydride 1,2,3,6-tétrahydrophtalique.

**7.** Utilisation selon l'une quelconque des revendications 1 à 6, dans laquelle le polymérisat A présente une masse moléculaire moyenne en poids ≥ 3 000 g/mole et ≤ 40 000 g/mole.

**8.** Utilisation selon l'une quelconque des revendications 1 à 7, dans laquelle le polymérisat A présente une température de transition vitreuses 20 et ≤ 105 °C.

**9.** Utilisation selon l'une quelconque des revendications 1 à 8, dans laquelle le polyol B est un composé de type alcanolamine.

**10.** Utilisation selon l'une quelconque des revendications 1 à 9, dans laquelle le polyol B est choisi parmi la diéthanolamine, la triéthanolamine, la diisopropanolamine, la triisopropanolamine, la méthyldiéthanolamine, la butyldiéthanolamine et/ou la méthyldiisopropanolamine.

**11.** Utilisation selon l'une quelconque des revendications 1 à 10, dans laquelle les quantités de polymérisat A et polyol B sont choisies de manière que le rapport du nombre d'équivalents de groupes carboxy du polymérisat A au nombre d'équivalents de groupes hydroxy du polyol B vaut de 100:1 à 1:3.

**12.** Polymérisat A, pouvant être obtenu par polymérisation radicalaire de

| | |
|---|---|
| 0,1 à 40 % en poids | d'au moins un monomère A1, |
| 40 à 99,9 % en poids | d'au moins un monomère A2, |
| 0 à 50 % en poids | d'au moins un monomère A3, et |
| 0 à 30 % en poids | d'au moins un monomère A4, |

la somme des monomères A1 à A4 étant égale à 100 % en poids.

**13.** Liant aqueux, contenant

a) un polymérisat A, qui a été obtenu par polymérisation radicalaire de
0,1 à 40 % en poids d'au moins un monomère A1,
40 à 99,9 % en poids d'au moins un monomère A2,
0 à 50 % en poids d'au moins un monomère A3, et
0 à 30 % en poids d'au moins un monomère A4,
la somme des monomères A1 à A4 étant égale à 100 % en poids,
b) un composé polyol comportant au moins 2 groupes hydroxy (polyol B).

**14.** Procédé pour la production d'un corps moulé à partir d'un substrat fibreux et/ou granulaire et d'un liant aqueux, **caractérisé en ce que** d'abord on imprègne le substrat fibreux et/ou granulaire avec un liant aqueux selon la revendication 13, éventuellement on met en la forme désirée le substrat imprégné et à la suite de cela on sèche le substrat imprégné, puis on le fait durcir à une température ≥ 130 °C.

**15.** Procédé selon la revendication 14, **caractérisé en ce qu'**on choisit la quantité du liant aqueux de manière à utiliser pour 100 g de substrat fibreux et/ou granulaire ≥ 1 g et ≤ 100 g de liant, constitué de la somme de polymérisat A et polyol B (calculé en tant que matière solide).

**16.** Corps moulé pouvant être obtenu conformément à un procédé selon la revendication 14 ou 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE OS1720277 A
- US 5521266 A
- EP 780401 A
- DE 102005035692 A
- EP 891430 A
- EP 670909 A
- EP 450452 A
- WO 9745461 A


### In der Beschreibung aufgeführte Nicht-Patentliteratur


- **A. Sen et al.** *Journal American Chemical Society,* 2001, vol. 123, 12738-12739
- **B. Klumperman et al.** *Macromolecules,* 2004, vol. 37, 4406-4416
- **A. Sen et al.** *Journal of Polymer Science, Part A: Polymer Chemistry,* 2004, vol. 42 (24), 6175-6192
- **S.M. Samoilov.** *J. Macromol. Sci. Chem.,* 1983, vol. A19 (1), 107-122
- **E. Witek ; A. Kochanowski ; E. Bortel.** *Polish Journal of Applied Chemistry XLVI,* 2000, 177-185
- Technischen Polymerchemie. VCH, 1993
- **B. Vollmert.** Grundriss der Makromolekularen Chemie. E. Vollmert Verlag, 1988, vol. 1
- **G. Kanig.** *Kolloid-Zeitschrift & Zeitschrift für Polymere,* vol. 190, 1
- **T.G. Fox.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. Brandrup ; E.H. Immergut.** Polymer Handbook. J. Wiley, 1966
- POLYMER HANBOOK. J.Wiley, 1975
- POLYMER HANBOOK. J. Wiley, 1989